(19) Europäisches Patentamt / European Patent Office / Office européen des brevets

(11) **EP 4 075 273 B1**

(12) **EUROPEAN PATENT SPECIFICATION**

(45) Date of publication and mention
of the grant of the patent:
**12.11.2025 Bulletin 2025/46**

(21) Application number: **19955606.9**

(22) Date of filing: **09.12.2019**

(51) International Patent Classification (IPC):
**G06N 20/00** (2019.01)   **H04L 41/147** (2022.01)
**H04L 41/16** (2022.01)   **H04L 41/40** (2022.01)
**H04L 41/5009** (2022.01)   **G06F 9/50** (2006.01)

(52) Cooperative Patent Classification (CPC):
**G06N 20/00; G06F 9/5027; H04L 41/147;**
**H04L 41/16; H04L 41/40; H04L 41/5009;**
G06F 2209/501; G06F 2209/5019

(86) International application number:
**PCT/JP2019/048025**

(87) International publication number:
**WO 2021/117081 (17.06.2021 Gazette 2021/24)**

(54) **DEVICE FOR PREVENTING CLOUD SERVICE USER REQUIREMENT VIOLATION, USER REQUIREMENT VIOLATION PREVENTING METHOD, AND PROGRAM**

VORRICHTUNG ZUR VERHINDERUNG DER VERLETZUNG VON BENUTZERANFORDERUNGEN FÜR CLOUD-DIENSTE, VERFAHREN ZUR VERHINDERUNG DER VERLETZUNG VON BENUTZERANFORDERUNGEN UND PROGRAMM

DISPOSITIF DE PRÉVENTION DE VIOLATION D'EXIGENCE D'UTILISATEUR DE SERVICE EN NUAGE, PROCÉDÉ DE PRÉVENTION DE VIOLATION D'EXIGENCE D'UTILISATEUR ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.10.2022 Bulletin 2022/42**

(73) Proprietor: **NTT, Inc.**
**Tokyo 100-8116 (JP)**

(72) Inventors:
• **WU, Chao**
**Musashino-shi, Tokyo 180-8585 (JP)**
• **HORIUCHI, Shingo**
**Musashino-shi, Tokyo 180-8585 (JP)**
• **TAYAMA, Kenichi**
**Musashino-shi, Tokyo 180-8585 (JP)**

(74) Representative: **Nederlandsch Octrooibureau**
**P.O. Box 29720**
**2502 LS The Hague (NL)**

(56) References cited:
**EP-A2- 2 615 803       JP-A- 2018 124 878**
**JP-A- 2019 087 105**

• **WU CHAO, SHINGO HORIUCHI, KENICHI TAYAMA: "Resource communication calculation method to realize IBSM", IEICE TECHNICAL REPORT, vol. 118, no. 303 (ICM2018-31), 8 November 2018 (2018-11-08), JP , pages 39 - 44, XP009536623, ISSN: 2432-6380**

**Description**

TECHNICAL FIELD

The present invention relates to a prevention apparatus of user requirement violation for cloud service, a prevention method of user requirement violation and a program thereof

BACKGROUND ART

In cloud service and virtual network function (VNF) that perform various information processing via cloud computing, there is demand for a technique for automatically carrying out resource design according to user requirements, and in particular, according to processing loads (workloads) and performance requirements (e.g., Non-Patent Literature, Patent Literature 11).

CITATION LIST

NON-PATENT LITERATURE

Non-Patent Literature 1: "Wu Chao and Shingo Horiuchi, "Intent-based Cloud Service Management", ICIN 2018, Paris, France, February 2018.
Patent Literature 1: EP2615803 A2 Performance interference model for managing consolidated workloads in QoS-aware clouds.

SUMMARY OF THE INVENTION

TECHNICAL PROBLEM

When cloud resources are designed automatically according to user requirements in providing cloud services, even if penalties for violation of user requirements are different, resource design results cannot be adjusted. This means that the risk of user requirement violation cannot be adjusted and even if penalties for violation of user requirements are heavy in particular, the risk of violation cannot be reduced, which might result in profit losses and the like.
The present invention has been made in view of the above circumstances and has an object to provide a prevention apparatus of user requirement violation for cloud service, a prevention method of user requirement violation and a program thereof, that can reduce the ratio of prediction liable to result in user requirement violation by adjusting results of resource design even if it is highly likely that the user requirement violation will incur a heavy penalty.

MEANS FOR SOLVING THE PROBLEM

According to one aspect of the present invention, there is provided a requirement specifying functional unit that specifies a user requirement for a service of interest; and a resource design unit that predicts, by machine learning, performance achievable at a plurality of resource settings in performing the service of interest and selects a resource setting that satisfies the user requirement specified by the requirement specifying functional unit, based on results of the prediction, wherein the resource design unit generates a second model as a model for use to predict performance, the second model using a second loss function obtained by adding a function to a first model that uses an existing first loss function, the added function taking a finite value when actual performance is lower than predicted performance.

EFFECTS OF THE INVENTION

According to one aspect of the present invention, it is possible to reduce the ratio of prediction liable to result in user requirement violation by adjusting results of resource design even if it is highly likely that the user requirement violation will incur a heavy penalty.

BRIEF DESCRIPTION OF THE DRAWINGS

[Fig. 1] Fig. 1 is a block diagram showing a schematic functional configuration of a resource design apparatus according to an embodiment of the present invention.

[Fig. 2] Fig. 2 is a flowchart showing process details of how an N model and a P model are generated by a model generation unit according to the embodiment.

[Fig. 3] Fig. 3 is a flowchart showing process details of performance prediction carried out by a prediction unit according to the embodiment.

[Fig. 4] Fig. 4 is a diagram showing, in parallel, SLA violation risks VR of a P model and N model according to the embodiment.

[Fig. 5] Fig. 5 is a diagram showing, in parallel, performance prediction accuracies MAPE of the P model and N model according to the embodiment.

[Fig. 6] Fig. 6 is a diagram numerically showing results of Fig. 4 and Fig. 5 together according to the embodiment.

DESCRIPTION OF EMBODIMENTS

Description will be given below of an embodiment resulting from application of the present invention to a resource design apparatus incorporated as part of a system that provides services via cloud computing.

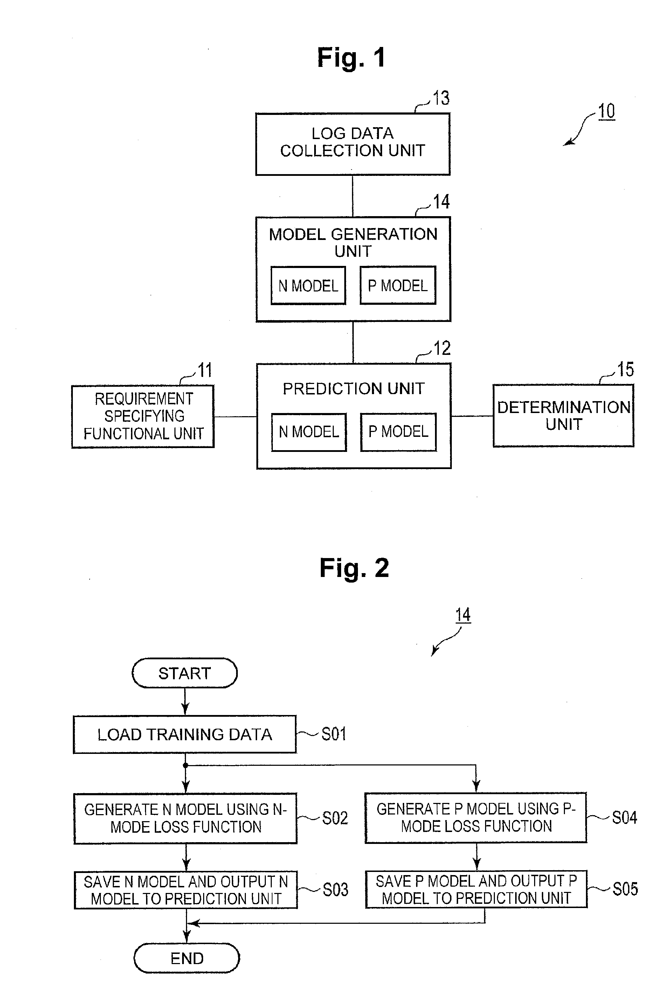

Fig. 1 is a block diagram showing a schematic functional configuration of the resource design apparatus 10. In Fig. 1, the resource design apparatus 10 includes a requirement specifying functional unit 11, a prediction unit 12, a log data collection unit 13, a model generation unit 14, and a determination unit 15.

In response to operation of cloud service users (hereinafter referred to as the "user") including the resource design apparatus 10, the requirement specifying functional unit 11 collects requirements for services, outputs user requirements to the prediction unit 12, receives and displays resource design results obtained from the prediction unit 12, and gives implementation instructions.

More specifically, as a user requirement, the requirement specifying functional unit 11 specifies an amount or characteristics of workload to be processed and a permissible performance resource design apparatus mode (N mode or P mode).

As a performance prediction model, the resource design apparatus 10 can be set to either N mode (normal mode) or P mode (protection mode, which is lower in SLA violation risk than the N mode under similar conditions). A cloud service system operator (hereinafter referred to as a "system administrator") or user who operates the resource design apparatus 10 specifies the P mode or the N mode according to a penalty for SLA violation. The system administrator or the user specifies at least one of an N model and a P model, where the N model uses an N-mode loss function, which is an existing function, while the P model uses a P-mode loss function obtained by adding a function that takes a finite value when actual performance of the service is lower than predicted performance in response to the user requirement.

When specifying a performance prediction model of the P model using the P-mode loss function in addition, the system administrator or the user specifies a definition of a penalty for user requirement violation, the definition being used in the P-mode loss function.

The log data collection unit 13 collects log data of performance under applicable conditions by varying, with respect to a conceivable task of an applicable cloud application, a machine learning model configuration and resources placed according to throughput, and performs reformatting, integration, preprocessing, and the like.

The log data is sent out as data for model training from the log data collection unit 13 to the model generation unit 14.

When processing workload specified by the user via the requirement specifying functional unit 11 using the log data from the log data collection unit 12A as model training data, the model generation unit 14 generates performance prediction models of the N model and P model for predicting performance achievable under applicable resource setting conditions and sends out the generated models to the prediction unit 12.

Using the performance prediction models of the N model and P model generated by the model generation unit 14, the prediction unit 12 predicts performances achievable under applicable resource setting conditions in handling specified throughput (workload) and sends out prediction results to the determination unit 15.

The determination unit 15 collectively select resource settings that can satisfy user-specified requirements, as resource design results, from the performance prediction results obtained from the prediction unit 12.

Next, operation of the present embodiment will be described.

Upon receiving user requirements specified by the requirement specifying functional unit 11, the model generation unit 14 generates an N model and P model for predicting performance in N mode and P mode.

Here, generation of the N model and P model uses different loss functions described below and consequently allows different prediction trends to be implemented.

An N-model loss function used for the N model is an existing loss function, such as an MAPE (Mean Absolute Percentage Error) or MAE (Mean Absolute Error) function, which does not have a prediction bias adjustment effect. In other words, this means that the probability that actual performance is better than predicted performance is equal to the probability that the actual performance is worse than the predicted performance. For example, if MAPE is used, a loss function L of MAPE is given by the following expression.

[Math. 1]

$$L = \frac{\sum_{i=1}^{N}(\frac{|pfm_i - \widehat{pfm_i}|}{pfm_i})}{N}$$

In the above expression, N is the number of training data items used to generate a model, "$pfm_i$" is actual performance in the i-th training data item, and "$pfm_i$" with an umbrella-shaped symbol put on the "pfm" portion is predicted performance for the i-th training data item.

That is, for each training data item, the absolute value of the difference obtained by subtracting the predicted performance from the actual performance is divided by the actual performance, and the resulting quotient is used as a relative error of training data; and then the sum total of the first to the n-th relative errors of the training data is found and the average value obtained by dividing the sum total by the number N of training data items is designated as the loss function L.

A P-model loss function $L_P$ used for the P model is given by the following expression.

[Math. 2]

$$L_P = \frac{\sum_{i=1}^{N}(\frac{|pfm_i - \widehat{pfm_i}|}{pfm_i} + w \times P)}{N}$$

The P-model loss function $L_P$ is found as follows: for the above-described N-model loss function L, addition of a penalty "$w \times P$" for user requirement violation to each i-th relative error is made for the first to the n-th relative errors of the training data and the sum total thereof is obtained, and the average value is found by dividing the sum total by the number N of training data items.

By adding the penalty "$w \times P$" for user requirement violation to the N-mode loss function L in this way, the P-model loss function $L_P$ converges in such a direction as to minimize a prediction error and the penalty "$w \times P$" for user requirement violation when the model generation unit 14 generates a model. Therefore, the penalty "$w \times P$" for user requirement violation serves as a function that takes a finite value for the N-model loss function L.

The penalty "$w \times P$" for user requirement violation is entered and specified as a setting that defines a penalty at the same time as the user specifies the P mode via the requirement specifying functional unit 11, where "w" may be set as any of various constants and "P" can be set using any of various functions as described below.

Two examples P1 and P2 of P will be cited below.

[Math. 3]

$$P1 = \begin{cases} \frac{|pfm_i - \widehat{pfm_i}|}{pfm_i}, & \text{if } pfm_i \text{ is worse than } \widehat{pfm_i} \\ 0, & \text{if } pfm_i \text{ is better than } \widehat{pfm_i} \end{cases}$$

$$P2 = \begin{cases} 1, & \text{if } pfm_i \text{ is worse than } \widehat{pfm_i} \\ 0, & \text{if } pfm_i \text{ is better than } \widehat{pfm_i} \end{cases}$$

In the above expression, P1 is an example in which a percentage difference (relative error) is given as a penalty when the actual performance is worse than the predicted performance and no penalty is given otherwise.

In the above expression, P2 is an example in which a constant 1 is given as a penalty when the actual performance is worse than the predicted performance and no penalty is given otherwise.

Fig. 2 is a flowchart showing process details of how an N model and a P model are generated by the model generation unit 14.

First, the model generation unit 14 reads training data out of the log data collection unit 13 (step S01).

Based on the read training data, the model generation unit 14 performs an N-model generation process using the N-mode loss function L described above (step S02). Then, the model generation unit 14 saves the generated N model and outputs the N generated model to the prediction unit 12 (step S03).

In parallel with the processes of steps S02 and S03, the model generation unit 14 performs a P-model generation process using the P-mode loss function $L_P$ described above based on the read training data (step S04). Then, the model generation unit 14 saves the generated P model and outputs the generated P model to the prediction unit 12 (step S05).

When the processes of both step S03 and step S05 are finished, the model generation unit 14 finishes the model generation process once.

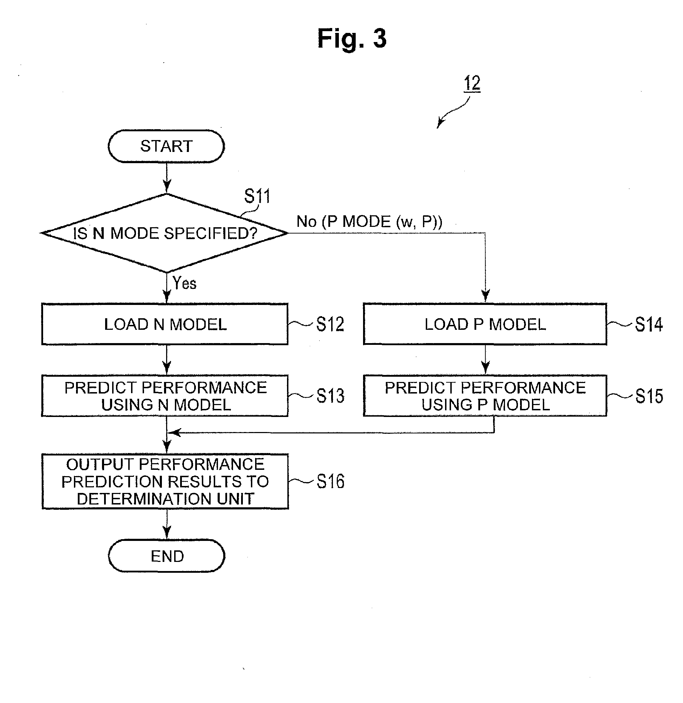

Fig. 3 is a flowchart showing details of a process carried out by the prediction unit 12 when the prediction unit 12 is specified to selectively carry out performance prediction of one of an N model and a P model.

First, the prediction unit 12 determines which of the N mode and the P mode has been specified, based on whether the performance prediction mode specified by the user or the system administrator is the N mode (step S11).

If it is determined that N-mode performance prediction has been specified (Yes in step S11), the prediction unit 12 reads an N model (step S12) and performs a performance prediction process using the read N model (step S13).

The prediction unit 12 outputs the acquired N-model performance prediction results to the determination unit 15 (step S16) and thereby finishes the performance prediction process once.

If it is determined in step S11 that rather than N mode, P-model performance prediction including the penalty "w × P" for user requirement violation has been specified (No in step S11), the prediction unit 12 reads the P model (step S14) and performs a performance prediction process using the read P model (step S15).

The prediction unit 12 outputs the acquired P-model performance prediction results to the determination unit 15 (step S16) and thereby finishes the performance prediction process once.

Note that in the process of Fig. 3, description has been given of operation performed by the prediction unit 12 when performance prediction of one of an N model and a P model has been specified selectively. Besides, when performance prediction of both N model and P model has been specified, the prediction unit 12 performs the processes of steps S12 and S13 in parallel with the processes of steps S14 and S15 and outputs prediction results on performances of the N model and P model collectively to the determination unit 15 in step S16.

To assess a user requirement violation prevention effect, the determination unit 15 uses a user requirement violation index VR shown below.

[Math. 4]

$$VR = \frac{\sum_{j=1}^{M} V_j}{M},$$

$$V_j = \begin{cases} 1, & \text{if } excutime_j > \widehat{excutime}_j \\ 0, & \text{if } excutime_j \leq \widehat{excutime}_j \end{cases}$$

The user requirement violation risk index VR represents the ratio of the number of predictions liable to result in user requirement violation in making M performance predictions, and the larger the value of VR, the more liable a user requirement violation is to occur.

Description will be given below of an implementation example in which a risk assessment of user requirement violation is conducted in performance prediction of an N model and P model.

Here, in a machine learning service of MLaaS (Machine Learning as a Service) carried out on the resource design apparatus 10, results of training each of an N model and a P model were tuned using 23,046 sets of log data.

In the present embodiment, execution time prediction errors and user requirement violation risks were assessed in P mode and N mode using 5-fold cross-validation (training data : validation data = 80% : 20%).

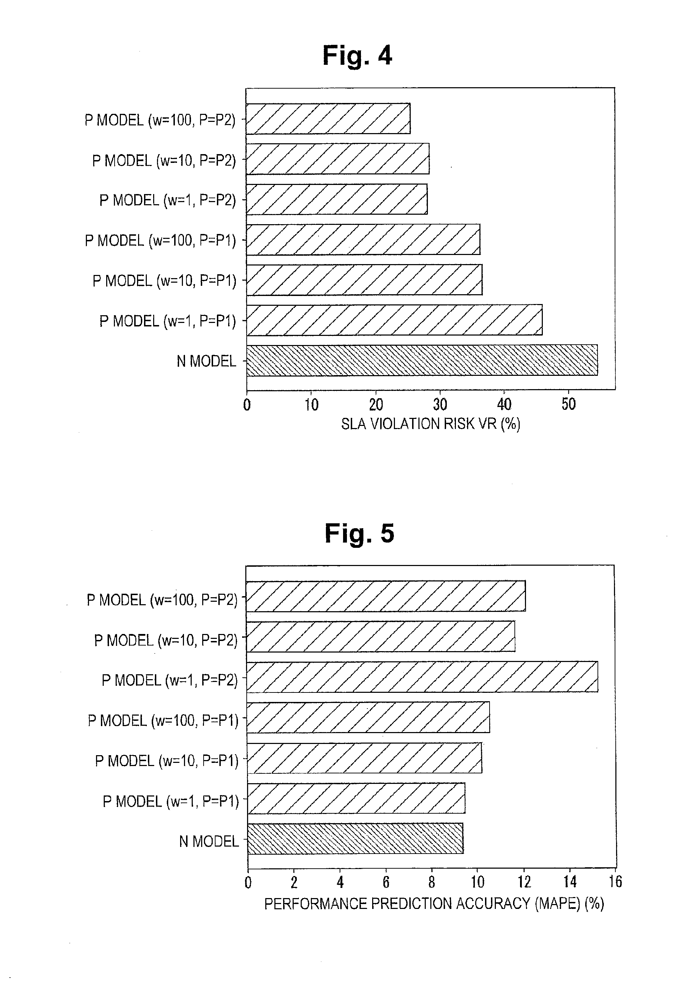

Fig. 4 is a diagram showing, in parallel, SLA violation risks VR of a P model and an N model in which various values of w and P are implemented (w = 1, 10, 100; P = P1, P2 (see Math. 3)).

Here, the value of SLA violation risk VR of the P model is the smallest when w = 100 and P = P2. As illustrated in Fig. 4, the P model can reduce the user requirement violation risk VR more than the N model can. In addition, it can be seen that with the P model, the user can adjust the user requirement violation risk VR as desired by varying w and P.

Fig. 5 is a diagram showing, in parallel, performance prediction accuracies MAPE of the P model and N model in which various values of w and P are similarly implemented (w = 1, 10, 100; P = P1, P2 (see Math. 3)).

Here, the value of performance prediction accuracy of the P model is the largest when w = 1 and P = P2. As illustrated, whereas the P model can reduce the user requirement violation risk more than the N model can, the performance prediction accuracy may change slightly.

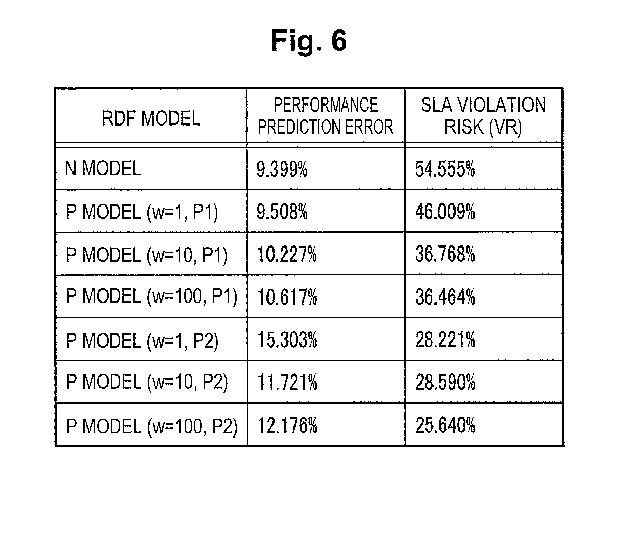

Fig. 6 is a diagram numerically showing results of Fig. 4 and Fig. 5 together.

In actual operation, the N mode or the P mode is select depending on the extent of the penalty for user requirement violation by taking a trade-off between violation risk and prediction accuracy into consideration, and when the P model is selected, w and P are set appropriately.

As described in detail above, the present embodiment makes it possible to reduce the ratio of prediction liable to result in user requirement violation by adjusting results of resource design even if it is highly likely that the user requirement violation will incur a heavy penalty.

Since the present embodiment allows the user to give specifications as desired in order to define the penalty "w $\times$ P" in the P-mode loss function used in machine learning performance prediction of the P model, a selection can be made in such a way as to avoid user requirement violation whenever possible.

Furthermore, since the present embodiment allows the system administrator or the user to selectively specify at least one of the N-mode and P-mode performance prediction models, a performance prediction model that uses a loss function suited to circumstances can be selected appropriately.

The apparatus according to the present invention can also be implemented by a computer and program, and the program can be either recorded on the recording medium or provided via a network.

Besides, the present invention is not limited to the embodiment described above, and may be modified in various forms in the implementation stage without departing from the gist of the invention. The above embodiment includes inventions in various stages, and various inventions can be extracted through appropriate combinations of the disclosed components. For example, even if some of all the components shown in the embodiment are removed, the resulting configuration can be extracted as an invention as long as the configuration can solve the problem described in Technical Problem and provide the effects described in Effects of the Invention.

REFERENCE SIGNS LIST

| | |
|---|---|
| 10 | Resource design apparatus |
| 11 | Requirement specifying functional unit |
| 12 | Prediction unit |
| 13 | Log data collection unit |
| 14 | Model generation unit |
| 15 | Determination unit |

**Claims**

1. A resource design apparatus (10) for user requirement violation prevention for cloud service, wherein the resource design apparatus (10) can be set to either a N mode as a normal mode, or a P mode as a protection mode, comprising:

   a requirement specifying unit (11) that is configured to specify a user requirement for the cloud service;
   a prediction unit (12) that is configured to predict performances achievable under a plurality of resource setting conditions of resource settings in handling a specified throughput; and
   a determination unit (15) that is configured to select one of the resource settings that satisfies the user requirement specified by the requirement specifying unit (11), based on results of the prediction, wherein
   the requirement specifying unit (11) is configured to specify at least one of a first model, being the N mode, for which a first loss function is used or a second model, being the P mode, for which a second loss function is used, as a model for use to predict performance, the second loss function being obtained by adding, to the first loss function, a function indicating a penalty "w $\times$ P" for user requirement violation which is specified by a user, where "w" is set as any of various constants and "P" is set as a function in which a percentage difference is given as a penalty when the actual performance is worse than the predicted performance and no penalty is given otherwise, or as a function in which a constant 1 is given as a penalty when the actual performance is worse than the predicted performance and no penalty is given otherwise, the added function taking a finite value when performance is lower than predicted performance,
   the prediction unit (12) is configured to perform the prediction using the first model when the first model has been specified, and performs the prediction using the second model in which the penalty "w $\times$ P" is reflected for each of the various constants and for each of the various functions when the second model has been specified, and
   the determination unit (15) is configured to select one of the resource settings, based on results of the prediction, by assessing a user requirement violation prevention effect to reduce the ratio of prediction liable to result in user requirement violation for a cloud service.

2. A resource design method for user requirement violation prevention for cloud service, wherein the resource design method can use either a N mode as a normal mode, or a P mode as a protection mode, the method comprising:

a requirement specifying step of specifying a user requirement for the cloud service;
a prediction step of predicting performances achievable under a plurality of resource setting conditions of resource settings in handling a specified throughput; and
a selection step of selecting one of the resource settings that satisfies the user requirement specified by the requirement specifying step, based on results of the prediction, wherein
the requirement specifying step includes specifying at least one of a first model, being the N mode, for which a first loss function is used or a second model, being the P mode, for which a second loss function is used, the second loss function being obtained by adding, to the first loss function, a function indicating a penalty "w $\times$ P" for user requirement violation which is specified by a user, where "w" is set as any of various constants and "P" is set as a function in which a percentage difference is given as a penalty when the actual performance is worse than the predicted performance and no penalty is given otherwise, or as a function in which a constant 1 is given as a penalty when the actual performance is worse than the predicted performance and no penalty is given otherwise, the added function taking a finite value when performance is lower than predicted performance,
the prediction step includes performing the prediction using the first model when the first model has been specified, and performing the prediction using the second model in which the penalty "w $\times$ P" is reflected for each of the various constants and for each of the various functions when the second model has been specified, and
the selection step includes selecting one of the resource settings, based on results of the prediction, by assessing a user requirement violation prevention effect to reduce the ratio of prediction liable to result in user requirement violation for a cloud service.

3. A computer-readable storage medium having a program stored thereon which program that causes a processor of the user requirement violation prevention apparatus for cloud service according to claim 1, to perform processes of components of the user requirement violation prevention apparatus for cloud service.

**Patentansprüche**

1. Ressourcendesignvorrichtung (10) für Benutzeranforderungsverletzungsverhinderung für Cloud-Service, wobei die Ressourcendesignvorrichtung (10) entweder auf einen N-Modus als normalen Modus oder auf einen P-Modus als Schutzmodus eingestellt werden kann, umfassend:

eine Anforderungsspezifizierungseinheit (11), die dazu konfiguriert ist, eine Benutzeranforderung für den Cloud-Service zu spezifizieren;
eine Vorhersageeinheit (12), die dazu konfiguriert ist, Leistungen vorherzusagen, die unter einer Vielzahl von Ressourceneinstellungsbedingungen von Ressourceneinstellungen bei der Handhabung eines spezifizierten Durchsatzes erreichbar sind; und
eine Bestimmungseinheit (15), die dazu konfiguriert ist, eine der Ressourceneinstellungen auszuwählen, die die von der Anforderungsspezifizierungseinheit (11) spezifizierte Benutzeranforderung erfüllt, basierend auf Ergebnissen der Vorhersage, wobei die Anforderungsspezifizierungseinheit (11) dazu konfiguriert ist, mindestens eines von einem ersten Modell, das der N-Modus ist, für das eine erste Verlustfunktion verwendet wird, oder einem zweiten Modell, das der P-Modus ist, für das eine zweite Verlustfunktion verwendet wird, als ein Modell zur Verwendung zur Vorhersage von Leistung zu spezifizieren, wobei die zweite Verlustfunktion durch Hinzufügen einer Funktion, die eine Strafe "w $\times$ P" für Benutzeranforderungsverletzung anzeigt, die von einem Benutzer spezifiziert wird, zu der ersten Verlustfunktion erhalten wird, wobei "w" als eine von verschiedenen Konstanten gesetzt wird und "P" als eine Funktion gesetzt wird, in der eine prozentuale Differenz als Strafe gegeben wird, wenn die tatsächliche Leistung schlechter ist als die vorhergesagte Leistung und andernfalls keine Strafe gegeben wird, oder als eine Funktion, in der eine Konstante 1 als Strafe gegeben wird, wenn die tatsächliche Leistung schlechter ist als die vorhergesagte Leistung und andernfalls keine Strafe gegeben wird, wobei die hinzugefügte Funktion einen endlichen Wert annimmt, wenn die Leistung niedriger ist als die vorhergesagte Leistung,
die Vorhersageeinheit (12) dazu konfiguriert ist, die Vorhersage unter Verwendung des ersten Modells durchzuführen, wenn das erste Modell spezifiziert wurde, und die Vorhersage unter Verwendung des zweiten Modells durchführt, in dem die Strafe "w $\times$ P" für jede der verschiedenen Konstanten und für jede der verschiedenen Funktionen reflektiert wird, wenn das zweite Modell spezifiziert wurde, und
die Bestimmungseinheit (15) dazu konfiguriert ist, eine der Ressourceneinstellungen basierend auf Ergebnissen der Vorhersage auszuwählen, indem ein Benutzeranforderungsverletzungsverhinderungseffekt bewertet wird, um das Verhältnis von Vorhersagen zu reduzieren, die wahrscheinlich zu einer Benutzeranforderungsverletzung für einen Cloud-Service führen.

2. Ressourcendesignverfahren für Benutzeranforderungsverletzungsverhinderung für Cloud-Service, wobei das Ressourcendesignverfahren entweder einen N-Modus als normalen Modus oder einen P-Modus als Schutzmodus verwenden kann, wobei das Verfahren umfasst:

einen Anforderungsspezifizierungsschritt des Spezifizierens einer Benutzeranforderung für den Cloud-Service; einen Vorhersageschritt des Vorhersagens von Leistungen, die unter einer Vielzahl von Ressourceneinstellungsbedingungen von Ressourceneinstellungen bei der Handhabung eines spezifizierten Durchsatzes erreichbar sind; und einen Auswahlschritt des Auswählens einer der Ressourceneinstellungen, die die im Anforderungsspezifizierungsschritt spezifizierte Benutzeranforderung erfüllt, basierend auf Ergebnissen der Vorhersage, wobei der Anforderungsspezifizierungsschritt das Spezifizieren mindestens eines von einem ersten Modell, das der N-Modus ist, für das eine erste Verlustfunktion verwendet wird, oder einem zweiten Modell, das der P-Modus ist, für das eine zweite Verlustfunktion verwendet wird, umfasst, wobei die zweite Verlustfunktion durch Hinzufügen einer Funktion, die eine Strafe "w × P" für Benutzeranforderungsverletzung anzeigt, die von einem Benutzer spezifiziert wird, zu der ersten Verlustfunktion erhalten wird, wobei "w" als eine von verschiedenen Konstanten gesetzt wird und "P" als eine Funktion gesetzt wird, in der eine prozentuale Differenz als Strafe gegeben wird, wenn die tatsächliche Leistung schlechter ist als die vorhergesagte Leistung und andernfalls keine Strafe gegeben wird, oder als eine Funktion, in der eine Konstante 1 als Strafe gegeben wird, wenn die tatsächliche Leistung schlechter ist als die vorhergesagte Leistung und andernfalls keine Strafe gegeben wird, wobei die hinzugefügte Funktion einen endlichen Wert annimmt, wenn die Leistung niedriger ist als die vorhergesagte Leistung, der Vorhersageschritt das Durchführen der Vorhersage unter Verwendung des ersten Modells umfasst, wenn das erste Modell spezifiziert wurde, und das Durchführen der Vorhersage unter Verwendung des zweiten Modells, in dem die Strafe "w × P" für jede der verschiedenen Konstanten und für jede der verschiedenen Funktionen reflektiert wird, wenn das zweite Modell spezifiziert wurde, und der Auswahlschritt das Auswählen einer der Ressourceneinstellungen basierend auf Ergebnissen der Vorhersage umfasst, indem ein Benutzeranforderungsverletzungsverhinderungseffekt bewertet wird, um das Verhältnis von Vorhersagen zu reduzieren, die wahrscheinlich zu einer Benutzeranforderungsverletzung für einen Cloud-Service führen.

3. Computerlesbares Speichermedium mit einem darauf gespeicherten Programm, welches Programm einen Prozessor der Benutzeranforderungsverletzungsverhinderungsvorrichtung für Cloud-Service nach Anspruch 1 dazu veranlasst, Prozesse von Komponenten der Benutzeranforderungsverletzungsverhinderungsvorrichtung für Cloud-Service durchzuführen.

**Revendications**

1. Appareil de conception de ressources (10) pour prévention de violation d'exigence utilisateur pour service cloud, dans lequel l'appareil de conception de ressources (10) peut être réglé soit sur un mode N comme mode normal, soit sur un mode P comme mode de protection, comprenant :

une unité de spécification d'exigence (11) qui est configurée pour spécifier une exigence utilisateur pour le service cloud ; une unité de prédiction (12) qui est configurée pour prédire des performances réalisables sous une pluralité de conditions de paramétrage de ressources de paramétrages de ressources dans le traitement d'un débit spécifié ; et une unité de détermination (15) qui est configurée pour sélectionner l'un des paramétrages de ressources qui satisfait l'exigence utilisateur spécifiée par l'unité de spécification d'exigence (11), sur la base de résultats de la prédiction, dans lequel l'unité de spécification d'exigence (11) est configurée pour spécifier au moins l'un d'un premier modèle, étant le mode N, pour lequel une première fonction de perte est utilisée ou d'un second modèle, étant le mode P, pour lequel une seconde fonction de perte est utilisée, comme modèle à utiliser pour prédire la performance, la seconde fonction de perte étant obtenue en ajoutant, à la première fonction de perte, une fonction indiquant une pénalité « w × P » pour violation d'exigence utilisateur qui est spécifiée par un utilisateur, où « w » est réglé comme l'une quelconque de diverses constantes et « P » est réglé comme une fonction dans laquelle une différence en pourcentage est donnée comme pénalité quand la performance réelle est pire que la performance prédite et aucune pénalité n'est donnée autrement, ou comme une fonction dans laquelle une constante 1 est donnée comme pénalité quand la performance réelle est pire que la performance prédite et aucune pénalité n'est donnée autrement, la fonction ajoutée prenant une valeur finie quand la performance est inférieure à la performance prédite,

l'unité de prédiction (12) est configurée pour effectuer la prédiction en utilisant le premier modèle quand le premier modèle a été spécifié, et effectue la prédiction en utilisant le second modèle dans lequel la pénalité « w × P » est reflétée pour chacune des diverses constantes et pour chacune des diverses fonctions quand le second modèle a été spécifié, et

l'unité de détermination (15) est configurée pour sélectionner l'un des paramétrages de ressources, sur la base de résultats de la prédiction, en évaluant un effet de prévention de violation d'exigence utilisateur pour réduire le ratio de prédiction susceptible de résulter en violation d'exigence utilisateur pour un service cloud.

2. Procédé de conception de ressources pour prévention de violation d'exigence utilisateur pour service cloud, dans lequel le procédé de conception de ressources peut utiliser soit un mode N comme mode normal, soit un mode P comme mode de protection, le procédé comprenant :

une étape de spécification d'exigence de spécification d'une exigence utilisateur pour le service cloud ;
une étape de prédiction de prédiction de performances réalisables sous une pluralité de conditions de paramétrage de ressources de paramétrages de ressources dans le traitement d'un débit spécifié ; et
une étape de sélection de sélection de l'un des paramétrages de ressources qui satisfait l'exigence utilisateur spécifiée par l'étape de spécification d'exigence, sur la base de résultats de la prédiction, dans lequel
l'étape de spécification d'exigence inclut spécifier au moins l'un d'un premier modèle, étant le mode N, pour lequel une première fonction de perte est utilisé ou d'un second modèle, étant le mode P, pour lequel une seconde fonction de perte est utilisée, la seconde fonction de perte étant obtenue en ajoutant, à la première fonction de perte, une fonction indiquant une pénalité « w × P » pour violation d'exigence utilisateur qui est spécifiée par un utilisateur, où « w » est réglé comme l'une quelconque de diverses constantes et « P » est réglé comme une fonction dans laquelle une différence en pourcentage est donnée comme pénalité quand la performance réelle est pire que la performance prédite et aucune pénalité n'est donnée autrement, ou comme une fonction dans laquelle une constante 1 est donnée comme pénalité quand la performance réelle est pire que la performance prédite et aucune pénalité n'est donnée autrement, la fonction ajoutée prenant une valeur finie quand la performance est inférieure à la performance prédite,
l'étape de prédiction inclut effectuer la prédiction en utilisant le premier modèle quand le premier modèle a été spécifié, et effectuer la prédiction en utilisant le second modèle dans lequel la pénalité « w × P » est reflétée pour chacune des diverses constantes et pour chacune des diverses fonctions quand le second modèle a été spécifié, et
l'étape de sélection inclut sélectionner l'un des paramétrages de ressources, sur la base de résultats de la prédiction, en évaluant un effet de prévention de violation d'exigence utilisateur pour réduire le ratio de prédiction susceptible de résulter en violation d'exigence utilisateur pour un service cloud.

3. Support de stockage lisible par ordinateur ayant un programme stocké sur celui-ci, lequel programme amène un processeur de l'appareil de prévention de violation d'exigence utilisateur pour service cloud selon la revendication 1, à effectuer des processus de composants de l'appareil de prévention de violation d'exigence utilisateur pour service cloud.

# Fig. 1

```
                    ┌──────────────────┐  ⌐13
                    │    LOG DATA      │
                    │ COLLECTION UNIT  │              ⌐10
                    └──────────────────┘               10
                             │
                    ┌──────────────────┐  ⌐14
                    │ MODEL GENERATION │
                    │      UNIT        │
                    │ ┌───────┐┌───────┐│
                    │ │N MODEL││P MODEL││
                    │ └───────┘└───────┘│
                    └──────────────────┘
                             │
                    ┌──────────────────┐  ⌐12
  ⌐11               │  PREDICTION UNIT │            ⌐15
┌──────────────┐    │ ┌───────┐┌───────┐│   ┌──────────────┐
│ REQUIREMENT  │    │ │N MODEL││P MODEL││   │ DETERMINATION│
│  SPECIFYING  │────│ └───────┘└───────┘│───│    UNIT      │
│FUNCTIONAL UNIT│   └──────────────────┘    └──────────────┘
└──────────────┘
```

# Fig. 2

14

```
                    ┌─────────┐
                    │  START  │
                    └─────────┘
                         │
            ┌────────────────────────┐
            │   LOAD TRAINING DATA   │── S01
            └────────────────────────┘
                         │
           ┌─────────────┴─────────────────────┐
           │                                   │
┌──────────────────────────┐       ┌──────────────────────────┐
│ GENERATE N MODEL USING N-│       │ GENERATE P MODEL USING P-│
│   MODE LOSS FUNCTION     │ S02   │   MODE LOSS FUNCTION     │ S04
└──────────────────────────┘       └──────────────────────────┘
           │                                   │
┌──────────────────────────┐       ┌──────────────────────────┐
│ SAVE N MODEL AND OUTPUT N│       │ SAVE P MODEL AND OUTPUT P │
│ MODEL TO PREDICTION UNIT │ S03   │ MODEL TO PREDICTION UNIT  │ S05
└──────────────────────────┘       └──────────────────────────┘
           │                                   │
           └─────────────┬─────────────────────┘
                    ┌─────────┐
                    │   END   │
                    └─────────┘
```

# Fig. 3

12

```
            ┌─────────────┐
            │    START    │
            └─────────────┘
                   │
                   ▼
                        S11
         ╱─────────────────────╲        No (P MODE (w, P))
        ╱  IS N MODE SPECIFIED? ╲──────────────────────────────┐
        ╲                       ╱                               │
         ╲─────────────────────╱                               │
                   │ Yes                                        │
                   ▼                                            ▼
        ┌───────────────────────┐              ┌───────────────────────┐
        │     LOAD N MODEL      │  S12         │     LOAD P MODEL      │  S14
        └───────────────────────┘              └───────────────────────┘
                   │                                            │
                   ▼                                            ▼
        ┌───────────────────────┐              ┌───────────────────────┐
        │  PREDICT PERFORMANCE  │  S13         │  PREDICT PERFORMANCE  │  S15
        │     USING N MODEL     │              │     USING P MODEL     │
        └───────────────────────┘              └───────────────────────┘
                   │                                            │
                   │◄───────────────────────────────────────────┘
                   ▼
        ┌───────────────────────┐
        │  OUTPUT PERFORMANCE   │
        │  PREDICTION RESULTS TO│  S16
        │  DETERMINATION UNIT   │
        └───────────────────────┘
                   │
                   ▼
            ┌─────────────┐
            │     END     │
            └─────────────┘
```

# Fig. 4

# Fig. 5

# Fig. 6

| RDF MODEL | PERFORMANCE PREDICTION ERROR | SLA VIOLATION RISK (VR) |
|---|---|---|
| N MODEL | 9.399% | 54.555% |
| P MODEL (w=1, P1) | 9.508% | 46.009% |
| P MODEL (w=10, P1) | 10.227% | 36.768% |
| P MODEL (w=100, P1) | 10.617% | 36.464% |
| P MODEL (w=1, P2) | 15.303% | 28.221% |
| P MODEL (w=10, P2) | 11.721% | 28.590% |
| P MODEL (w=100, P2) | 12.176% | 25.640% |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2615803 A2

**Non-patent literature cited in the description**

- **WU CHAO** ; **SHINGO HORIUCHI**. Intent-based Cloud Service Management. *ICIN 2018, Paris, France*, February 2018